**Europäisches Patentamt**

**European Patent Office**

**Office européen des brevets**

(11) Veröffentlichungsnummer: **0 154 245**
**B1**

(12) **EUROPÄISCHE PATENTSCHRIFT**

(45) Veröffentlichungstag der Patentschrift:
26.07.89

(21) Anmeldenummer: **85101796.2**

(22) Anmeldetag: **19.02.85**

(51) Int. Cl.⁴: **C 08 G 69/28**

(54) Verfahren zur Herstellung von Copolyamiden aus Adipinsäure, Terephthalsäure und Hexamethylendiamin.

(30) Priorität: **01.03.84 DE 3407492**

(43) Veröffentlichungstag der Anmeldung:
**11.09.85 Patentblatt 85/37**

(45) Bekanntmachung des Hinweises auf die Patenterteilung:
**26.07.89 Patentblatt 89/30**

(84) Benannte Vertragsstaaten:
**DE FR GB IT**

(56) Entgegenhaltungen:
**EP-A- 0 121 984**
**CH-A- 451 511**
**DE-C- 929 151**
**US-A- 3 402 152**
**US-A- 3 501 441**

(73) Patentinhaber: **BAYER AG,**
**D-5090 Leverkusen 1 Bayerwerk (DE)**

(72) Erfinder: **Nielinger, Werner, Dr., Bärenstrasse 21,**
**D-4150 Krefeld (DE)**
Erfinder: **Alewelt, Wolfgang, Dr.,**
**Bodelschwinghstrasse 32, D-4150 Krefeld 1 (DE)**
Erfinder: **Binsack, Rudolf, Dr., Bethelstrasse 4a,**
**D-4150 Krefeld 1 (DE)**
Erfinder: **Bottenbruch, Ludwig, Dr., Woehlerstrasse 5,**
**D-4150 Krefeld 1 (DE)**
Erfinder: **Füllmann, Heinz-Josef, Dr.,**
**Heymannstrasse 30, D-5090 Leverkussen 1 (DE)**

**Beschreibung**

Gegenstand der Erfindung sind Verfahren zur Herstellung von Copolyamiden aus Adipinsäure, Terephthalsäure und Hexamethylendiamin mit 25 bis 48 Gew.-% Einheiten des Hexamethylenterephthalamids, indem man die Monomeren bei wenigstens 250°C und einem Druck von wenigstens 35 bar vorkondensiert und die Polykondensation in üblicher Weise zu Ende führt.

Polyamide wie Polyamid-6 und Polyamid-66 zeichnen sich durch große Härte, Steifigkeit und Wärmeformbeständigkeit aus. Sie sind widerstandsfähig gegen Abrieb und Verschleiß und beständig gegen eine Vielzahl von Chemikalien. Daher finden die Polyamide mannigfache Anwendung zur Herstellung von technischen Formkörpern wie beispielsweise in der Automobilindustrie.

Für viele Einsatzgebiete ist es jedoch notwendig, die Formkörper auch höheren Temperaturen auszusetzen. Dies gilt vor allem für die verstärkten Produkte. Bestimmte Copolyamide aus Adipinsäure, Terephthalsäure und Hexamethylendiamin erfüllen diese Forderung. Ihre Herstellung wird in der DE-PS-929 151 und ihre Verwendung zur Herstellung von Folien ist in der europäischen Patentanmeldung 34 757 beschrieben; ferner wird in der deutschen Offenlegungsschrift 2 927 018 ihre Verwendung als glasfaserverstärktes Material zur Extrusion von Profilen offenbart. Der Erweichungspunkt von Copolyamiden, die mehr als 18 Gew.-% Poly(hexamethylenterephthalamid) enthalten, steigt gemäß der britischen Patentschrift 1 114 541 auf über 265°C an, wogegen in DP 929 151 für Copolyamide mit 20 Gew.-% Poly-(hexamethylenterephthalamid) ein Schmelzpunkt von 249°C angegeben ist. In der DOS 1 669 453 sind Polyamide aus Adipinsäure, Terephthalsäure und Hexamethylendiamin beschrieben, die als Nukleierungsmittel für Polyamidfasern verwendet werden können. Diese Copolyamide sind aber wegen ihrer hohen Schmelzpunkte als Spritzgießmaterial ungeeignet. Zur Verbesserung der Herstellbarkeit von Copolyamiden aus Adipinsäure, Terephthalsäure und Hexamethylendiamin wird in DOS 1 745 076 der Zusatz von Sulfonamiden vor oder während der Polykondensation empfohlen.

Besonders geeignete Copolyamide sind solche mit mehr als 35 Gew.-% Poly(hexamethylenterephthalamid), da deren Schmelztemperatur gegenüber der des Poly(hexamethylenadipamids) deutlich erhöht ist und ihre Einfriertemperatur oberhalb 75°C liegt. Die Eigenschaften dieser nach dem Stand der Technik hergestellten Copolyamide sind jedoch schwankend, so daß man nach den bekannten Verfahren keine reproduzierbaren Produkte erhält. Dies ist besonders dann der Fall, wenn man gemäß der Lehre des Standes der Technik die Vorkondensation bei Temperaturen um 220°C durchführt und lange Aufheizzeiten, wie bei der Herstellung im Autoklaven, erforderlich sind. So können sich Copolyamide gleicher Bruttozusammensetzung in Abhängigkeit von den Herstellungsbedingungen nicht nur im Schmelzpunkt um mehr als 10°C, sondern auch in der Einfriertemperatur um mehr als 5°C unterscheiden. Die nach dem Stand der Technik hergestellten Copolyamide sind außerdem in Ameisensäure nicht vollständig löslich. Diese unlöslichen Teile verschlechtern die Zähigkeitseigenschaften des Copolyamids, da sie zur Rißbildung bei Schlagbeanspruchung führen können.

Überraschenderweise wurde nun gefunden, daß man Copolyamide mit verbesserten Eigenschaften aus Adipinsäure, Terephthalsäure und Hexamethylendiamin mit höheren Terephthalsäuregehalten herstellt, wenn man die wäßrige Lösung der Monomeren für die Vorkondensation sehr rasch auf eine Temperatur von wenigstens 250°C, vorzugsweise jedoch auf mindestens 260°C erhitzt und das erhaltene Vorkondensat nach bekannten Verfahren bis zum gewünschten Molekulargewicht fertig kondensiert.

Gegenstand der Erfindung sind daher Verfahren zur Herstellung von homogenen, in Ameisensäure vollständig löslichen Polyamiden aus Adipinsäure, Terephthalsäure und Hexamethylendiamin mit 25 bis 48, vorzugsweise 30 bis 45 Gew.-% Einheiten des Hexamethylenterephthalamids, dadurch gekennzeichnet, daß man eine 40 bis 70, vorzugsweise 45 bis 65%ige wäßrige Lösung der Monomeren in weniger als 15 min., vorzugsweise innerhalb von 1 bis 10 min. bei einem Druck von wenigstens 35 bar auf wenigstens 250°C, vorzugsweise auf 260 bis 300°C erhitzt und das Wasser bei Temperaturen von 260–300°C bei einem Druck von 1–40 bar, vorzugsweise 1–35 bar, in einer oder mehreren Stufen abdestilliert, wobei ein Vorkondensat mit einer relativen Viskosität von 1,5 bis 2,4, bevorzugt 1,8 bis 2,3, erhalten wird, das bei Normaldruck in bekannter Weise nachkondensiert wird.

Die Nachkondensation ist auch nach dem Erstarren des Vorkondensates in der festen Phase möglich. Zur Herstellung des Copolyamids ist beispielsweise eine Vorrichtung, wie sie in der amerikanischen Patentschrift 2 361 717, Fig. I beschrieben ist, geeignet.

Die Copolyamide, die nach dem erfindungsgemäßen Verfahren hergestellt wurden, sind in Ameisensäure glatt löslich. Sie haben gegenüber den nach bekannten Verfahren hergestellten Produkten eine höhere Glastemperatur, verringerte Wasseraufnahme und verbesserte Zähigkeit. Sie lassen sich auf handelsüblichen Maschinen wie Spritzgußmaschinen oder Extrudern verarbeiten.

Den erfindungsgemäß hergestellten Copolyamiden können die üblichen Zusätze und Hilfsmittel wie Gleit- und Entformungsmittel, sowie Stabilisatoren und Brandschutzmittel zugesetzt werden, ferner Füllstoffe, insbesondere Glasfasern in Mengen von 10 bis 60 Gew.-%, bezogen auf die gesamte Mischung. Als weitere Füll- und Verstärkungsstoffe kommen Mikroglaskugeln, Kreide, Quarze wie beispielsweise Novaculit und Silikate wie Asbest, Feldspat, Glimmer, Talkum, Wollastonit sowie Kaolin in kalzinierter und nicht kalzinierter Form in Betracht. Außerdem sind Farbstoffe und Pigmente, insbesondere Farbruße und/oder Nigrosinbasen zu nennen, ferner Schlagzähmodifikatoren, beispielsweise auf der Basis von Copolymerisaten des Ethylens, Poly(meth)acrylaten und gepfropften Polybutadienen.

Die Copolyamide sind besonders zur Herstellung von Formkörpern vielfältiger Art wie Spritzgußteilen, Platten, Folien und Fasern geeignet. Sie werden insbesondere zur Herstellung von Maschinenbauteilen, von technischen Geräten und im Automobilbau eingesetzt. Ein weiteres Einsatzgebiet ist der Elektrosektor.

Die relativen Viskositäten werden an einer 1%igen Lösung des Polyamids in m-Kresol bei 25°C gemessen.

Beispiel 1

Für die kontinuierliche Herstellung des Copolyamids eignet sich z. B. die in der US-Patentschrift 2 361 717, Fig. I beschriebene Apparatur.

Man pumpt eine 50%ige wäßrige Salzlösung, die 11,7 Teile Terephthalsäure, 16,8 Teile Adipinsäure und 21,5 Teile Hexamethylendiamin (entsprechend 40 Gew.-% Polyamid 6T-Anteil, bezogen auf das Copolyamid) enthält, aus einer auf 80°C beheizten Vorlage mit einem Druck von 70 bar durch eine auf 280°C ölbeheizte Rohrschlange von 6 m Länge und mit einem Durchmesser von 10 mm. Der Durchsatz an Salzlösung beträgt 3000 g/h. Das Reaktionsgemisch wird dann über ein Entspannungsventil in eine zweite, auf 290°C beheizte Rohrschlange mit einem Durchmesser von 10 mm und einer Länge von 12 m entspannt. Die zweite Rohrschlange endet in einem auf 280°C beheizten zylinderförmigen Behälter, in dem sich die Polyamidschmelze vom Wasserdampf trennt. Der Wasserdampf wird über ein zweites Entspannungsventil aus dem zylinderförmigen Behälter abgelassen und kondensiert. Der Druck in der zweiten Rohrschlange und im zylinderförmigen Behälter wird auf 30 bar eingestellt. Die Polyamidschmelze wird mit einer Zahnradpumpe in eine kurze Schnecke mit Ausdampföffnungen gefördert und weiter aufkondensiert. Anschließend wird die Polyamidschmelze abgesponnen, in einem Wasserbad gekühlt und granuliert. Das Granulat hat eine relative Viskosität von 2,1, gemessen an einer einprozentigen Lösung in m-Kresol bei 25°C in einem Ubbelohde-Viskosimeter. Dieses niedermolekulare Polyamidgranulat wird diskontinuierlich in einem Taumeltrockner in 8 Stunden bei 200°C im Stickstoffstrom auf die gewünschte Endviskosität von 3 in der festen Phase nachkondensiert.

Die Verweilzeit des Reaktionsgemisches in der ersten Rohrschlange beträgt ca. 9,5 min, wobei nach etwa 3 min auf eine Temperatur von 280°C aufgeheizt ist. Nach dem ersten Entspannen fällt die Temperatur kurzfristig auf 250°C. In der zweiten Rohrschlange wird auf 290°C aufgeheizt, und nach einer mittleren Verweilzeit in der Rohrschlange einschließlich Dampfabscheider von ca. 10 min wird innerhalb ca. 5 min in der Schnecke zu dem Polyamid mit der relativen Viskosität 2,1 kondensiert.

Beispiel 2

Nach dem in Beispiel 1 beschriebenen Verfahren wird aus einer wäßrigen Salzlösung aus 9,7 Teilen Terephthalsäure, 18,8 Teilen Adipinsäure, 21,6 Teilen Hexamethylendiamin und 50 Teilen Wasser, entsprechend 33 Gew.-% Poly(Hexamethylendiaminterephthalamid) ein niedrigviskoses Polyamid mit einer Lösungsviskosität von 2,3 erzeugt. Die Nachkondensation in der Festphase liefert nach 6 Stunden bei 200°C im Stickstoffstrom ein Copolyamid mit der gewünschten relativen Viskosität von 2,9.

Beispiel 3

Nach dem in Beispiel 1 beschriebenen Verfahren wird aus einer wäßrigen Salzlösung aus 14,1 Teilen Terephthalsäure, 14,6 Teilen Adipinsäure, 21,4 Teilen Hexamethylendiamin und 50 Teilen Wasser, entsprechend 48 Gew.-% Poly(hexamethylendiamin-terephthalamid), ein niedrigviskoses Polyamid mit einer relativen Viskosität von 1,9 erzeugt. Die Nachkondensation in der Festphase liefert nach 12 Stunden bei 200°C im Stickstoffstrom ein Copolyamid mit der gewünschten relativen Viskosität von 3,0.

Vergleichsbeispiel 1

Diskontinuierliche Herstellung eines Copolyamids aus Adipinsäure, Terephthalsäure und Hexamethylendiamin mit 40 Gew.-% Hexamethylenterephthalamideinheiten.

a) Herstellung der Salzlösung. Zu einer Suspension von 1727 g (10,39 Mol) Terephthalsäure in 4329 g destillierten Wassers gibt man langsam bei 90–95°C unter Rühren in einer Stickstoffatmosphäre 3975 g einer 80%igen wäßrigen Hexamethylendiaminlösung (27,37 Mol Hexamethyldiamin) und anschließend zu der klaren Lösung 2480 g (16,96 Mol) Adipinsäure. Diese Lösung wird auf einen pH-Wert von 7,0 eingestellt, wobei die Messung des pH-Wertes nach Verdünnen auf 5% Feststoffgehalt erfolgt. Nach Zugabe weiterer 30 g Adipinsäure zur Begrenzung des Molekulargewichts wird die ca. 56%ige Lösung in einen Autoklaven gefüllt.

b) Polykondensation der Salzlösung. Im Autoklaven wird die Salzlösung unter Rühren in einer Stickstoffatmosphäre unter Rühren in einer Stickstoffatmosphäre innerhalb 50 min auf 210°C erhitzt, dabei stellt sich ein Druck von 20 bar ein. Im Verlaufe von 2 Stunden erhöht man die Temperatur auf 260°C, der Druck wird durch Entspannen konstant gehalten. Danach wird innerhalb von 2 Stunden vollständig entspannt, wobei die Temperatur gleichzeitig auf 285 bis 290°C erhöht wird. Nach einer weiteren Stunde wird das Copolyamid abgesponnen, in einem Wasserbad gekühlt, granuliert und getrocknet. Die relative Viskosität des Produktes ist 3,1.

Die kontinuierlich und diskontinuierlich hergestellten Copolyamide mit 40 Gew.-% Polyamid 6 T-Anteil gemäß Beispiel 1 bzw. Vergleichsbeispiel 1 haben die folgenden charakteristischen Merkmale:

| Polyamid gemäß | Beispiel 1 | Vergleichs-beispiel 1 |
|---|---|---|
| rel. Viskosität | 3,0 | 3,1 |
| Schmelzmaximum DTA, 2. Aufheizen | 287°C | 276°C |
| Löslichkeit in Ameisensäure | löslich | nicht vollständig löslich |
| Schlagzähigkeit DIN 53453 | kein Bruch | mehrere Brüche |

**Patentansprüche**

1. Verfahren zur Herstellung von Copolyamiden aus Adipinsäure, Terephthalsäure und Hexamethylendiamin mit 25–48 Gew.-% Einheiten des Hexamethylenterephthalamids, dadurch gekennzeichnet, daß man 40–70%ige, wäßrige Lösung der Monomeren in weniger als 15 min bei einem Druck von wenigstens 35 bar auf wenigstens 250 °C erhitzt und das Wasser in einer oder mehreren Stufen bei einem Druck von 1–40 bar abdestilliert, wobei ein Vorkondensat mit einer relativen Viskosität von 1,5–2,4 erhalten wird, das in bekannter Weise nachkondensiert wird.

2. Verfahren nach Anspruch 1, dadurch gekennzeichnet, daß man eine 45–65%ige wäßrige Lösung der Monomeren innerhalb von 1–10 min auf 260–300 °C erhitzt.

3. Verfahren nach Anspruch 1 oder 2, dadurch gekennzeichnet, daß man bis zu einer relativen Viskosität von 1,8–2,3 vorkondensiert.

4. Verfahren nach Ansprüchen 1–3 zur Herstellung von Copolyamiden mit 30–45 Gew.-% Einheiten von Hexamethylenterephthalamid.

5. Verfahren nach Ansprüchen 1–4, dadurch gekennzeichnet, daß man die Vorkondensation bei Drucken von 1–35 bar durchführt.

**Claims**

1. Process for the preparation of copolyamides from adipic acid, terephthalic acid and hexamethylenediamine containing 25–48% by weight of units of hecamethylene terephthalamide, characterised in that aqueous, 40–70% by weight solutions of the monomers are heated to at least 250 °C in less than 15 minutes at a pressure of at least 35 bar and the water is distilled off at a pressure of from 1 to 40 bar in one or more stages, a precondensate having a relative viscosity of from 1.5 to 2.4 being obtained, which precondensate is after-condensed in known manner.

2. Process according to claim 1, characterised in that an aqueous 45–65% solution of the monomers is heated to 260–300 °C within 1–10 minutes.

3. Process according to claim 1 or 2, characterised in that precondensation is carried out to a relative viscosity of from 1.8 to 2.3.

4. Process according to claims 1 to 3 for the preparation of copolyamides containing from 30 to 45% by weight of units of hexamethyleneterephthalamide.

5. Process according to claims 1 to 4, characterised in that the precondensation is carried out at 1–35 bar.

**Revendications**

1. Procédé de production de copolyamides à partir d'acide adipique, d'acide téréphtalique et d'hexaméthylènediamine avec 25–48% en poids de motifs d'hexaméthylènetéréphtalamide, caractérisé en ce qu'on chauffe une solution aqueuse à 40–70% des monomères en moins de 15 minutes à une pression d'au moins 35 bars à une température d'au moins 250 °C et on chasse l'eau par distillation en une ou plusieurs étapes à une pression de 1 à 40 bars, et on obtient alors un précondensat ayant une viscosité relative de 1,5 à 2,4 que l'on post-condense d'une manière connue.

2. Procédé suivant la revendication 1, caractérisé en ce qu'on chauffe une solution à 45–65% des monomères en 1 à 10 minutes à 260–300 °C.

3. Procédé suivant la revendication 1 ou 2, caractérisé en ce qu'on effectue la précondensation jusqu'à une viscosité relative de 1,8 à 2,3.

4. Procédé suivant les revendications 1 à 3, pour la production de copolyamides renfermant 30 à 45% en poids de motifs d'hexaméthylènetéréphtalamide.

5. Procédé suivant les revendications 1 à 4, caractérisé en ce qu'on effectue la précondensation à des pressions de 1 à 35 bars.